# EUROPEAN PATENT APPLICATION

(11) **EP 3 118 266 A1**
(43) Date of publication of application: **18.01.2017**
(21) Application number: 15762346.3
(22) Date of filing: 10.03.2015
(51) Int. Cl.: C09D 7/12

(54) **FLUORINE-CONTAINING BORIC ACID COMPOSITE PARTICLES**

(30) Priority: 11.03.2014 JP 2014047313
(71) Applicant: Unimatec Co., Ltd., Tokyo 105-0012 (JP); Hirosaki University, Hirosaki-shi, Aomori 036-8224 (JP)
(72) Inventor: FUKUSHIMA, Takeshi, Kitaibaraki-shi Ibaraki 319-1544 (JP); SATO, Katsuyuki, Kitaibaraki-shi Ibaraki 319-1544 (JP); SAWADA, Hideo, Hirosaki-shi Aomori 036-8224 (JP)
(74) Representative: Beckmann, Claus
(86) International application number: PCT/JP2015/057022
(87) International publication number: WO 2015/137343

(57) **Abstract**

The present invention provides fluorine-containing boric acid composite particles comprising a condensate of boric acid and a fluorine-containing alcohol represented by the general formula:

R_{F}-A-OH [I]

wherein R_{F} is a perfluoroalkyl group having 6 or less carbon atoms, or a polyfluoroalkyl group, in which some of the fluorine atoms of the perfluoroalkyl group are replaced by a hydrogen atom or atoms, and which contains a terminal perfluoroalkyl group having 6 or less carbon atoms and a perfluoroalkylene group having 6 or less carbon atoms; and A is an alkylene group having 1 to 6 carbon atoms. The fluorine-containing boric acid composite particles may also be a condensate of boric acid, the said fluorine-containing alcohol, and an alkoxysilane at a molar ratio of 1.0 or less based on the fluorine-containing alcohol. These fluorine-containing boric acid composite particles has excellent adhesion to inorganic substrates, and the like.

## Description

### TECHNICAL FIELD

The present invention relates to fluorine-containing boric acid composite particles. More particularly, the present invention relates to fluorine-containing boric acid composite particles that have improved surface-treatment characteristics.

### BACKGROUND ART

It is known that various surface characteristics are developed by coating inorganic material surfaces with various compounds or polymers. In particular, when a fluorine-based compound is used for surface treatment, surface modification can be applied for not only water-repellency, but also oil-repellency, due to properties of fluorine atoms. Thus, such fluorine-based compounds are used for coating on various substrates.

In particular, highly water- and oil-repellent coatings can be obtained by applying a surface-treating agent having a C₈ perfluoroalkyl group to substrates. However, it is recently reported that compounds containing a perfluoroalkyl group having 7 or more carbon atoms induce intracellular communication inhibition, which is considered to be a carcinogenic factor, in *in-vitro* tests using cell strains; that this inhibition depends on the length of the fluorinated carbon chain, rather than the functional groups; and that a longer carbon chain has higher inhibitory actively. The production of monomers using fluorinated long-carbon-chain compounds has been restricted.

Moreover, fluorine-containing alcohols containing a perfluoroalkyl group having 6 or less carbon atoms problematically have insufficient adhesion to inorganic substrates such as glass, metal, and stone.

Patent Documents 1 and 2 indicate that a fluorine-containing alcohol, an alkoxysilane (and a polymerizable functional group-containing alcohol) are subjected to a condensation reaction. However, the resulting alkoxysilane derivatives are used for the preparation of a curable composition to which a photoacid generator or photobase generator is added, or for the preparation of an inorganic conductive coating composition.

### PRIOR ART DOCUMENTS

### PATENT DOCUMENTS

Patent Document 1: JP-A-2004-285111
Patent Document 2 : JP-A-5-186719
Patent Document 3 : JP-B-4674604
Patent Document 4 : WO 2007/080949 A1
Patent Document 5 : JP-A-2008-38015
Patent Document 6 : U.S. Pat. No. 3,574,770

### OUTLINE OF THE INVENTION

### PROBLEM TO BE SOLVED BY THE INVENTION

An object of the present invention is to provide fluorine-containing boric acid composite particles that do not produce perfluorooctanoic acid, and the like, even when released into the environment, that is formed using a fluorine-containing alcohol having units easily degradable to short-chain compounds, and that have adhesion to inorganic substrates, and the like.

### MEANS FOR SOLVING THE PROBLEM

The present invention provides fluorine-containing boric acid composite particles comprising a condensate of boric acid and a fluorine-containing alcohol represented by the general formula:

R_{F}-A-OH [I]

wherein R_{F} is a perfluoroalkyl group having 6 or less carbon atoms, or a polyfluoroalkyl group, in which some of the fluorine atoms of the perfluoroalkyl group are replaced by a hydrogen atom or atoms, and which contains a terminal perfluoroalkyl group having 6 or less carbon atoms and a perfluoroalkylene group having 6 or less carbon atoms; and A is an alkylene group having 1 to 6 carbon atoms. The fluorine-containing boric acid composite particles may also be a condensate of boric acid, the said fluorine-containing alcohol [I], and an alkoxysilane at a molar ratio of 1.0 or less based on the fluorine-containing alcohol.

Moreover, the present invention provides fluorine-containing boric acid composite particles comprising a condensate of boric acid and a fluorine-containing alcohol represented by the general formula:

R_{F}'-A-OH [Ia]

or the general formula:

HO-A-R_{F}" -A-OH [Ib]

wherein R_{F}' is a linear or branched perfluoroalkyl group containing a terminal perfluoroalkyl group having 6 or less carbon atoms and a perfluoroalkylene group having 6 or less carbon atoms, and containing an O, S, or N atom; R_{F}" is a linear or branched perfluoroalkylene group containing a perfluoroalkylene group having 6 or less carbon atoms, and containing an O, S, or N atom; and A is an alkylene group having 1 to 6 carbon atoms. The fluorine-containing boric acid composite particles may also be a condensate of boric acid, the said fluorine-containing alcohol [Ia] or [Ib], and an alkoxysilane at a molar ratio of 1.0 or less based on the fluorine-containing alcohol.

### EFFECT OF THE INVENTION

In the fluorine-containing alcohols used in the present invention, the carbon number of the terminal perfluoroalkyl group or the perfluoroalkylene chain in a polyfluoroalkyl group is 6 or less, and units easily degradable to short-chain compounds are contained. Therefore, the fluorine-containing alcohols do not lead to environmental pollution. Moreover, the resulting fluorine-containing boric acid composite particles can form a thin film that exhibits excellent water- and oil-repellency and antifouling properties on a substrate surface. This thin film also has excellent adhesion to inorganic substrates, and the like.

### EMBODIMENTS FOR CARRYING OUT THE INVENTION

The fluorine-containing alcohol [I] is, for example, a polyfluoroalkyl alcohol represented by the general formula:

CₙF₂ₙ₊₁(CH₂)ⱼOH [II]

n: 1 to 6, preferably 4 to 6
j: 1 to 6, preferably 1 to 3, particularly preferably 2

The alkylene group A is, for example, a -CH₂- group, a -CH₂CH₂- group, or the like. Examples of the perfluoroalkylalkyl alcohols having such an alkylene group include 2,2,2-trifluoroethanol (CF₃CH₂OH), 3,3,3-trifluoropropanol (CF₃CH₂CH₂OH), 2,2,3,3,3-pentafluoropropanol (CF₃CF₂CH₂OH), 3,3,4,4,4-pentafluorobutanol (CF₃CF₂CH₂CH₂OH), 2,2,3,3,4,4,5,5,5-nonafluoropentanol (CF₃CF₂CF₂CF₂CH₂OH), 3,3,4,4,5,5,6,6,6-nonafluorohexanol (CF₃CF₂CF₂CF₂CH₂CH₂OH), 3,3,4,4,5,5,6,6,7,7,8,8,8-tridecafluorooctanol (CF₃CF₂CF₂CF₂CF₂CF₂CH₂CH₂OH), and the like.

Moreover, a polyfluoroalkyl group refers to a group in which the terminal -CF₃ group of a perfluoroalkyl group is replaced by, for example, a -CF₂H group or a group in which the intermediate -CF₂- group is replaced by a -CFH- group or a -CH₂- group. Examples of the fluorine-containing alcohol [I] having such a substituent include 2,2,3,3-tetrafluoropropanol (HCF₂CF₂CH₂OH), 2,2,3,4,4,4-hexafluorobutanol (CF₃CHFCF₂CH₂OH), 2,2,3,3,4,4,5,5-octafluoropentanol (HCF₂CF₂CF₂CF₂CH₂OH), and the like.

The polyfluoroalkyl alcohol represented by the general formula [II] is described, for example, in Patent Document 3, and is synthesized through the following series of steps.

First, a polyfluoroalkyl iodide represented by the general formula:

CₙF₂ₙ₊₁(CF₂CF₂)_{b}(CH₂CH₂)_{c}I

is reacted with N-methylformamide HCONH(CH₃) to form a mixture of polyfluoroalkyl alcohol and its formate. Then, the mixture is subjected to a hydrolysis reaction in the presence of an acid catalyst to form a polyfluoroalkyl alcohol of the formula:

CₙF₂ₙ₊₁(CF₂CF₂)_{b}(CH₂CH₂)_{c}OH

However, the value of n+2b is 6 or less.

### Examples of the polyfluoroalkyl iodide include the following:

CF₃(CH₂CH₂)I

CF₃(CH_{Z}CH₂)₂I

C₂F₅(CH₂CH₂)I

C₂F₅(CH₂CH₂)₂I

C₃F₇(CH₂CH₂)I

C₃F₇(CH₂CH₂)₂I

C₄F₉(CH₂CH₂)I

C₄F₉(CH₂CH₂)₂I

C₂F₅(CF₂CF₂)(CH₂CH₂)I

C₂F₅(CF₂CF₂)(CH₂CH₂)₂I

C₂F₅(CF₂CF₂)₂(CH₂CH₂)I

C₂F₅(CF₂CF₂)₂(CH₂CH₂)₂I

C₄F₉(CF₂CF₂)(CH₂CH₂)I

C₄F₉(CF₂CF₂)(CH₂CH₂)₂I

The fluorine-containing alcohol [I] may also be a fluorine-containing alcohol wherein the R_{F} group is a polyfluoroalkyl group in which some of the fluorine atoms of the perfluoroalkyl group are replaced by hydrogen atoms, and which contains a terminal perfluoroalkyl group having 6 or less carbon atoms and a perfluoroalkylene group having 6 or less carbon atoms, specifically, a polyfluoroalkyl group having 3 to 20 carbon atoms, preferably 6 to 10 carbon atoms, and A is an alkylene group having 2 to 6 carbon atoms, preferably 2 carbon atoms. Examples thereof, for example, include a polyfluoroalkyl alcohol represented by the general formula:

CₙF₂ₙ₊₁(CH₂CF₂)ₐ(CF₂CF₂)_{b}(CH₂CH₂)_{c}OH [III]

n: 1 to 6, preferably 2 to 4
a: 1 to 4, preferably 1
b: 0 to 2, preferably 1 or 2
c: 1 to 3, preferably 1

The polyfluoroalkyl alcohol represented by the general formula [III] is disclosed in Patent Document 3, and synthesized through the following series of steps.

First, a polyfluoroalkyl iodide represented by the general formula:

CₙF₂ₙ₊₁(CH₂CF₂)ₐ(CF₂CF₂)_{b}(CH₂CH₂)_{c}I

is reacted with N-methylformamide HCONH(CH₃) to form a mixture of polyfluoroalkyl alcohol and its formate. The mixture is then subjected to a hydrolysis reaction in the presence of an acid catalyst to form a polyfluoroalkyl alcohol of the formula:

CₙF₂ₙ₊₁(CH₂CF₂)ₐ(CF₂CF₂)_{b}(CH₂CH₂)_{c}OH

### Examples of the polyfluoroalkyl iodide include the following:

CF₃(CH₂CF₂)(CH₂CH₂)I

C₂F₅(CH₂CF₂)(CH₂CH₂)I

C₂F₅(CH₂CF₂)(CH₂CH₂)₂I

C₃F₇(CH₂CF₂)(CH₂CH₂)I

C₃F₇(CH₂CF₂)(CH₂CH₂)₂I

C₄F₉(CH₂CF₂)(CH₂CH₂)I

C₄F₉(CH₂CF₂)(CH₂CH₂)₂I

C₂F₅(CH₂CF₂)(CF₂CF₂)(CH₂CH₂)I

C₂F₅(CH₂CF₂)(CF₂CF₂)(CH₂CH₂)₂I

C₂F₅(CH₂CF₂)₂(CF₂CF₂)(CH₂CH₂)I

C₂F₅(CH₂CF₂)₂(CF₂CF₂)(CH₂CH₂)₂I

C₄F₉(CH₂CF₂)(CF₂CF₂)(CH₂CH₂)I

C₄F₉(CH₂CF₂)₂(CF₂CF₂)(CH₂CH₂)I

C₄F₉(CH₂CF₂)(CF₂CF₂)(CH₂CH₂)₂I

C₄F₉(CH₂CF₂)₂(CF₂CF₂)(CH₂CH₂)₂I

The fluorine-containing alcohol [Ia] is a fluorine-containing alcohol wherein the R_{F}' group is a linear or branched perfluoroalkyl group containing a terminal perfluoroalkyl group having 6 or less carbon atoms and a perfluoroalkylene group having 6 or less carbon atoms, and containing an O, S, or N atom, specifically, a perfluoroalkyl group having 3 to 305 carbon atoms, preferably 8 to 35 carbon atoms, and containing O, S, or N atom, and A is an alkylene group having 1 to 3 carbon atoms, preferably 1 carbon atom. Examples thereof, for example, include a hexafluoropropene oxide oligomer alcohol represented by the general formula:

CₘF₂ₘ₊₁O[CF(CF₃)CF₂O]_{d}CF(CF₃)(CH₂)ₑOH [IIa]

m: 1 to 3, preferably 3
d: 0 to 100, preferably 1 to 10
e: 1 to 3, preferably 1

Moreover, the fluorine-containing alcohol [Ib] may be a fluorine-containing alcohol wherein the R_{F}" group contains a perfluoroalkylene group having 6 or less carbon atoms, specifically, a perfluoroalkylene group having 5 to 160 carbon atoms, and containing O, S, or N atom, and A is an alkylene group having 1 to 3 carbon atoms, preferably 1 carbon atom. Examples thereof, for example, include a perfluoroalkylene ether diol represented by the general formula:

HO(CH₂)_{f}CF(CF₃)[OCF₂CF(CF₃)]_{g}O(CF₂)ₕO[CF(CF₃)CF₂O]ᵢCF(CF₃)(CH₂)_{f}OH [IIb]

f: 1 to 3, preferably 1
g+i: 0 to 50, preferably 2 to 50
h: 1 to 6, preferably 2

Among the hexafluoropropene oxide oligomer alcohols represented by the general formula [IIa], a compound wherein m is 1 and e is 1 is described in Patent Document 4, and they are synthesized through the following step.

A fluorine-containing ether carboxylic acid alkyl ester represented by the general formula: CF₃O[CF(CF₃)CF₂O]ₙCF(CF₃)COOR (R: an alkyl group, n: an integer of 0 to 12) is subjected to a reduction reaction using a reducing agent such as sodium boron hydride.

Moreover, among the perfluoroalkylene ether diols represented by the general formula [IIb], a compound wherein f = 1 is disclosed in Patent Documents 5 and 6, and they are synthesized via the following series of steps:

FOCRfCOF → H₃COOCRfCOOCH₃ → HOCH₂RfCH₂OH

Rf:-CF(CF₃)[OCF₂C(CF₃)]ₐO(CF₂)_{c}O[CF(CF₃)CF₂O]_{b}CF(CF₃)-

When an alkoxysilane is used in combination with a fluorine-containing alcohol, the alkoxysilane is represented by the general formula:

(R₁O)ₚSi(OR₂)_{q}(R₃)ᵣ [IV]

R₁, R₃ : H, C₁-C₆ alkyl group, or aryl group
R₂: C₁-C₆ alkyl group or aryl group,
   with the proviso that not all of R₁, R₂, and R₃ are aryl groups
p + q + r: 4, with the proviso that q is not 0
and examples thereof include trimethoxysilane, triethoxysilane, trimethoxymethylsilane, triethoxymethylsilane, trimethoxyphenylsilane, triethoxyphenylsilane, tetramethoxysilane, tetraethoxysilane, and the like.

The proportion of these components is such that the boric acid is used at a ratio of about 0.1 to 50 parts by weight, preferably about 10 to 20 parts by weight, based on 100 parts by weight of fluorine-containing alcohol, and such that the alkoxysilane is used at a molar ratio of about 1.0 or less, preferably about 0.05 to 0.50, based on the amount of fluorine-containing alcohol. When the amount of boric acid used is less than this range, water- and oil-repellency decreases. In contrast, when the amount of boric acid used is greater than this range, dispersibility in a solvent decreases. Moreover, when the amount of alkoxysilane used is greater than this range, water- and oil-repellency decreases.

The amount of fluorine-containing alcohol in the obtained fluorine-containing boric acid composite particles is about 25 to 98 mol%, preferably about 40 to 70 mol%. The composite particle size (measured by a dynamic light scattering method) is about 10 to 600 nm, preferably about 15 to 350 nm.

In the fluorine-containing boric acid composite particles obtained as a reaction product, it is considered that the fluorine-containing alcohol is linked to a hydroxyl group of the boric acid particles. Therefore, the chemical and thermal stability of boric acid, and the excellent water- and oil-repellency, antifouling properties, and the like of fluorine are effectively exhibited. In fact, a glass surface treated with the fluorine-containing boric acid composite particles exhibits excellent water- and oil-repellency. Moreover, the particle size of the fluorine-containing boric acid composite particles, and the variation of the particle size show small values. The fluorine-containing boric acid composite particles are formed also as a reaction product of a fluorine-containing alcohol, an alkoxysilane, and boric acid particles; however, other components are allowed to be mixed as long as the object of the present invention is not impaired.

### EXAMPLES

The following describes the present invention with reference to Examples.

### Example 1

1,100 mg of CF₃(CF₂)₅(CH₂)₂OH [FA-6], 200 mg of boric acid, and 2 ml of tetrahydrofuran [THF] were charged in a 30-ml reaction vessel, and the mixture was stirred at room temperature for a day. Then, the solvent was distilled off, thereby obtaining 767 mg (yield: 59%) of the target fluorine-containing boric acid composite particles. With respect to the obtained fluorine-containing boric acid composite particles, the following items were measured.

### Particle size and its variation: Table 1

The particle size and its variation were measured using a methanol dispersion having a solid matters content of 1 g/L at 25°C by a dynamic light scattering (DLS) method

### Contact angle of droplets (unit: °): Table 2

Prepared glass slides were dipped in methanol dispersions (particle concentration: 5 g/L), and then dried under room temperature condition. 4 µl of droplets of n-dodecane or water were gently brought into contact with the obtained thin layer surfaces, and the contact angle of the droplets adhering to the thin layer surfaces was measured by the θ/2 method using a contact angle meter (Drop Master 300, produced by Kyowa Interface Science Co., Ltd.). The contact angle with water was measured with time.

The contact angles of both n-dodecane and water for the glass substrates in the Examples indicated water-repellency or oil-repellency.

### Examples 2 to 9

In Example 1, the amount of FA-6 and the amount of boric acid were changed in various ways.

### Examples 10 to 19

In Example 1, various fluorine-containing alcohols were used in place of FA-6, and tetraethoxysilane [TEOS; density: 0.94 g/cm³] was appropriately used. The amount of THF used in Examples 14 to 16 was 4 ml.
OXF3PO : HOCH₂CF(CF₃)OCF₂CF(CF₃)OCF₂CF₂OCF(CF₃)CH₂OH
OXF14PO :
   HOCH₂CF(CF₃) [OCF₂CF(CF₃)]ₙOCF₂CF₂O[CF(CF₃)CF₂O]ₘCF(CF₃)CH₂OH (n+m=12)
DTFAC : C₄F₉(CH₂CF₂)(CF₂CF₂)₂(CH₂CH₂)

**Table 1**

| | Fluorine-containing alcohol | | | Boric acid | TEOS | | Amount | Yield | Particle size |
|---|---|---|---|---|---|---|---|---|---|
| Example | Abbreviation | mg | mM | (mg) | ml | mM | (mg) | % | (nm) |
| 1 | FA-6 | 1100 | 3.02 | 200 | - | - | 767 | 59 | 130.0±15.0 |
| 2 | FA-6 | 1100 | 3.02 | 100 | - | - | 900 | 75 | 196.0±26.0 |
| 3 | FA-6 | 2200 | 6.04 | 100 | - | - | 1955 | 85 | 145.0±19.0 |
| 4 | FA-6 | 1100 | 3.02 | 200 | 0.10 | 0.45 | 1129 | 81 | 54.7±5.0 |
| 5 | FA-6 | 1100 | 3.02 | 100 | 0.10 | 0.45 | 1035 | 80 | 72.1 ±17.2 |
| 6 | FA-6 | 1100 | 3.02 | 50 | 0.10 | 0.45 | 908 | 73 | 24.3±2.4 |
| 7 | FA-6 | 2200 | 6.04 | 400 | 0.20 | 0.90 | 2565 | 92 | 578.4±155.1 |
| 8 | FA-6 | 2200 | 6.04 | 200 | 0.20 | 0.90 | 2381 | 92 | 72.1 ±17.2 |
| 9 | FA-6 | 2200 | 6.04 | 100 | 0.20 | 0.90 | 2115 | 85 | 24.3±2.4 |
| 10 | OXF3PO | 1250 | 2.23 | 60 | - | - | 1061 | 81 | 313.0±46.0 |
| 11 | OXF3PO | 1250 | 2.23 | 30 | - | - | 1152 | 90 | 288.0±78.0 |
| 12 | OXF3PO | 5600 | 10.0 | 30 | 0.05 | 0.23 | 1011 | 79 | 266.0±30.0 |
| 13 | OXF3PO | 1250 | 2.23 | 60 | 0.10 | 0.45 | 1166 | 89 | 65.7± 8.9 |
| 14 | OXF14PO | 1000 | 0.42 | 6.5 | - | - | 393 | 39 | 128.0±14.0 |
| 15 | OXF14PO | 1000 | 0.42 | 13 | - | - | 365 | 36 | 262.0±59.0 |
| 16 | OXF14PO | 1000 | 0.42 | 26 | - | - | 349 | 34 | 15.7± 1.0 |
| 17 | DTFAC | 100 | 0.19 | 12 | - | - | 108 | 96 | 105.0±25.0 |
| 18 | DTFAC | 100 | 0.19 | 5.9 | - | - | 103 | 97 | 10.8± 1.1 |
| 19 | DTFAC | 100 | 0.19 | 2.9 | - | - | 99 | 96 | 313.0±78.0 |

**Table2**

| | | Water (elapsed time: min.) | | | | | | |
|---|---|---|---|---|---|---|---|---|
| Example | n-dodecane | 0 | 5 | 10 | 15 | 20 | 25 | 30 |
| Ex.1 | 39 | 62 | 59 | 57 | 54 | 55 | 52 | 50 |
| Ex.2 | 39 | 46 | 46 | 46 | 46 | 47 | 48 | 48 |
| Ex.3 | 31 | 44 | 40 | 35 | 27 | 21 | 14 | 7 |
| Ex.4 | 31 | 45 | 41 | 36 | 32 | 27 | 19 | 14 |
| Ex.5 | 28 | 54 | 46 | 41 | 35 | 29 | 24 | 16 |
| Ex.6 | 31 | 42 | 38 | 34 | 30 | 22 | 20 | 15 |
| Ex.7 | 33 | 49 | 46 | 41 | 32 | 28 | 19 | 11 |
| Ex.8 | 37 | 53 | 48 | 42 | 38 | 32 | 21 | 23 |
| Ex.9 | 45 | 98 | 93 | 88 | 82 | 71 | 63 | 48 |
| Ex.10 | 49 | 62 | 56 | 50 | 45 | 36 | 30 | 29 |
| Ex.11 | 20 | 67 | 65 | 62 | 60 | 59 | 56 | 56 |
| Ex.12 | 47 | 44 | 42 | 41 | 37 | 36 | 33 | 31 |
| Ex.13 | 40 | 25 | 21 | 19 | 17 | 16 | 15 | 14 |
| Ex.14 | 53 | 53 | 50 | 49 | 47 | 46 | 45 | 42 |
| Ex.15 | 53 | 55 | 56 | 53 | 50 | 48 | 47 | 44 |
| Ex.16 | 56 | 58 | 49 | 48 | 47 | 44 | 43 | 42 |
| Ex.17 | 38 | 77 | 74 | 69 | 63 | 57 | 57 | 60 |
| Ex.18 | 49 | 71 | 69 | 66 | 60 | 53 | 47 | 43 |
| Ex.19 | 50 | 100 | 93 | 93 | 86 | 80 | 80 | 80 |

### Comparative Example 1

With respect to an uncoated glass substrate, a droplet contact angle was measured in the same manner as in Example 1.

### Comparative Example 2

With respect to a glass substrate coated with boric acid, a droplet contact angle was measured in the same manner as in Example 1.

### Comparative Examples 3 to 7

In the droplet contact angle measurement in Example 1, glass substrates coated with methanol dispersions (5 g/L) of the following samples in place of the fluorine-containing boric acid composite particle methanol dispersion were used.
Comparative Example 3 : boric acid / TEOS
Comparative Example 4 : FA-6
Comparative Example 5 : FA-6 / TEOS
Comparative Example 6 : OXF3PO
Comparative Example 7 : OXF14PO

However, in Comparative Example 3, FA-6 was not used in Example 1, and 50 mg (0.81 mmol) of boric acid and 0.10 ml (0.45 mmol) of TEOS were used. The amount of the product was 130 mg, and the yield was 90%. Moreover, in Comparative Example 5, boric acid was not used in Example 1, and 1,100 mg (3.02 mmol) of FA-6 and 0.10 ml (0.45 mmol) of TEOS were used. The amount of the product was 763 mg, and the yield was 68%.

The result of the foregoing Comparative Examples is shown in the following Table 3.

**Table3**

| | | Water (elapsed time: min.) | | | | | | |
|---|---|---|---|---|---|---|---|---|
| Example | n-dodecane | 0 | 5 | 10 | 15 | 20 | 25 | 30 |
| Com. Ex. 1 | 0 | 50 | - | - | - | - | - | - |
| Com. Ex. 2 | 22 | 66 | - | - | - | - | - | - |
| Com. Ex. 3 | 20 | 55 | - | - | - | - | - | - |
| Com. Ex. 4 | 30 | 43 | 39 | 35 | 31 | 22 | 21 | 16 |
| Com. Ex. 5 | 11 | 36 | 32 | 28 | 21 | 17 | 13 | 7 |
| Com. Ex. 6 | 45 | 62 | 60 | 58 | 56 | 55 | 50 | 53 |
| Com. Ex. 7 | 58 | 63 | 54 | 51 | 49 | 47 | 45 | 42 |

## Claims

1. Fluorine-containing boric acid composite particles comprising:
a condensate of boric acid and a fluorine-containing alcohol represented by the general formula:
R_{F}-A-OH [I]
wherein R_{F} is a perfluoroalkyl group having 6 or less carbon atoms, or a polyfluoroalkyl group, in which some of the fluorine atoms of the perfluoroalkyl group are replaced by a hydrogen atom or atoms, and which contains a terminal perfluoroalkyl group having 6 or less carbon atoms and a perfluoroalkylene group having 6 or less carbon atoms; and A is an alkylene group having 1 to 6 carbon atoms, or
a condensate of boric acid, the said fluorine-containing alcohol, and an alkoxysilane at a molar ratio of 1.0 or less based on the fluorine-containing alcohol.

2. The fluorine-containing boric acid composite particles according to claim 1, wherein the fluorine-containing alcohol represented by the general formula [I] is a polyfluoroalkyl alcohol represented by the general formula:
CₙF₂ₙ₊₁(CH₂)ⱼOH [II]
wherein n is an integer of 1 to 6, and j is an integer of 1 to 6.

3. The fluorine-containing boric acid composite particles according to claim 1, wherein the fluorine-containing alcohol represented by the general formula [I] is a polyfluoroalkyl alcohol represented by the general formula:
CₙF₂ₙ₊₁(CH₂CF₂)ₐ(CF₂CF₂)_{b}(CH₂CH₂)_{c}OH [III]
wherein n is an integer of 1 to 6, a is an integer of 1 to 4, b is an integer of 0 to 2, and c is an integer of 1 to 3.

4. The fluorine-containing boric acid composite particles according to claim 1, wherein the alkoxysilane is a silane derivative represented by the general formula:
(R₁O)ₚSi(OR₂)_{q}(R₃)ᵣ [IV]
wherein R₁ and R₃ are each a hydrogen atom, an alkyl group having 1 to 6 carbon atoms, or an aryl group; R₂ is an alkyl group having 1 to 6 carbon atoms or an aryl group, with the proviso that not all of R₁, R₂, and R₃ are aryl groups; and p+q+r is 4, with the proviso that q is not 0.

5. The fluorine-containing boric acid composite particles according to claim 1, wherein the boric acid is used at a ratio of 0.1 to 50 parts by weight based on 100 parts by weight of fluorine-containing alcohol.

6. Fluorine-containing boric acid composite particles comprising:
a condensate of boric acid and a fluorine-containing alcohol represented by the general formula:
R_{F}'-A-OH [Ia]
or the general formula:
HO-A-R_{F}"-A-OH [Ib]
wherein R_{F}' is a linear or branched perfluoroalkyl group containing a terminal perfluoroalkyl group having 6 or less carbon atoms and a perfluoroalkylene group having 6 or less carbon atoms, and containing an O, S, or N atom; R_{F}" is a linear or branched perfluoroalkylene group containing a perfluoroalkylene group having 6 or less carbon atoms, and containing an O, S, or N atom; and A is an alkylene group having 1 to 6 carbon atoms, or
a condensate of boric acid, the said fluorine-containing alcohol, and an alkoxysilane at a molar ratio of 1.0 or less based on the fluorine-containing alcohol.

7. The fluorine-containing boric acid composite particles according to claim 6, wherein the fluorine-containing alcohol represented by the general formula [Ia] is a hexafluoropropene oxide oligomer alcohol represented by the general formula:
CₘF₂ₘ₊₁O[CF(CF₃)CF₂O]_{d}CF(CF₃)(CH₂)ₑOH [IIa]
wherein m is an integer of 1 to 3, d is an integer of 0 to 100, and e is an integer of 1 to 3.

8. The fluorine-containing boric acid composite particles according to claim 6, wherein the fluorine-containing alcohol represented by the general formula [Ib] is a perfluoroalkylene ether diol represented by the general formula:
HO(CH₂)_{f}CF(CF₃)[OCF₂CF(CF₃)]_{g}O(CF₂)ₕO[CF(CF₃)CF₂O]ᵢCF(CF₃)(CH₂)_{f}OH [IIb]
wherein f is an integer of 1 to 3, g+i is an integer of 0 to 50, and h is an integer of 1 to 6.

9. The fluorine-containing boric acid composite particles according to claim 6, wherein the alkoxysilane is a silane derivative represented by the general formula:
(R₁O)ₚSi(OR₂)_{q}(R₃)ᵣ [IV]
wherein R₁ and R₃ are each a hydrogen atom, an alkyl group having 1 to 6 carbon atoms, or an aryl group; R₂ is an alkyl group having 1 to 6 carbon atoms or an aryl group, with the proviso that not all of R₁, R₂, and R₃ are aryl groups; and p+q+r is 4, with the proviso that q is not 0.

10. The fluorine-containing boric acid composite particles according to claim 6, wherein the boric acid is used at a ratio of 0.1 to 50 parts by weight based on 100 parts by weight of fluorine-containing alcohol.

11. The fluorine-containing boric acid composite particles according to claim 1 or 6, which have a particle size of 10 to 600 nm, measured by a dynamic light scattering method.

12. A surface-treating agent comprising the fluorine-containing boric acid composite particles according to claim 11 as an active ingredient.
